# EUROPEAN PATENT APPLICATION

(11) **EP 4 641 191 A1**
(43) Date of publication of application: **29.10.2025**
(21) Application number: 25170022.5
(22) Date of filing: 11.04.2025
(51) Int. Cl.: G01N 30/88

(54) **METHOD FOR ANALYZING WAX OR RUBBER COMPOSITION, AND RUBBER COMPOSITION**

(30) Priority: 26.04.2024 JP 2024072401; 17.01.2025 JP 2025007149
(71) Applicant: Sumitomo Rubber Industries, Ltd., Kobe-shi, Hyogo 651-0072 (JP)
(72) Inventor: UNNO, Yuma, Kobe-shi, 651-0072 (JP); YAMADA, Hiroaki, Kobe-shi, 651-0072 (JP); YOSHITANI, Mio, Kobe-shi, 651-0072 (JP)
(74) Representative: Manitz Finsterwald Patent- und Rechtsanwaltspartnerschaft mbB

(57) **Abstract**

Provided are a method for analyzing a wax or a rubber composition that can easily visualize components such as structural isomers, and a rubber composition with excellent ozone resistance. The disclosure relates to a method for analyzing a wax or a rubber composition by chromatography, the chromatography being analyzed using RI-plot.

## Description

### TECHNICAL FIELD

The present invention relates to methods for analyzing waxes or rubber compositions, and rubber compositions.

### BACKGROUND ART

To improve the ozone resistance of rubber compositions, various approaches have been considered, including optimization and development of wax, modifications to the polymer backbones, and adjustment of the hardness and elastic modulus to control the degree of strain during the use of tires. Of these approaches, modifications to the polymer backbones and adjustment of the hardness and elastic modulus may significantly affect the tire properties other than ozone resistance, such as fuel economy and ride quality, and therefore they are difficult to optimize. In contrast, optimization and development of wax are considered desirable because this approach little changes the tire properties other than ozone resistance and can also be applied to a variety of rubber formulations. The approach is investigated in many ways (c.f., Patent Literature 1).

### CITATION LIST

### PATENT LITERATURE

Patent Literature 1: JP 2011-116847 A

### SUMMARY OF INVENTION

### TECHNICAL PROBLEM

The present invention aims to solve the problem and provide a method for analyzing a wax or a rubber composition that can easily visualize components such as structural isomers, and a rubber composition with excellent ozone resistance.

### SOLUTION TO PROBLEM

The present invention relates to a method for analyzing a wax or a rubber composition by chromatography, the chromatography being analyzed using RI-plot.

### ADVANTAGEOUS EFFECTS OF INVENTION

The present invention relates to a method for analyzing a wax or a rubber composition by chromatography, the chromatography being analyzed using RI-plot. The present invention can provide a method for analyzing a wax or a rubber composition that can easily visualize components such as structural isomers, and a rubber composition with excellent ozone resistance.

### BRIEF DESCRIPTION OF DRAWINGS

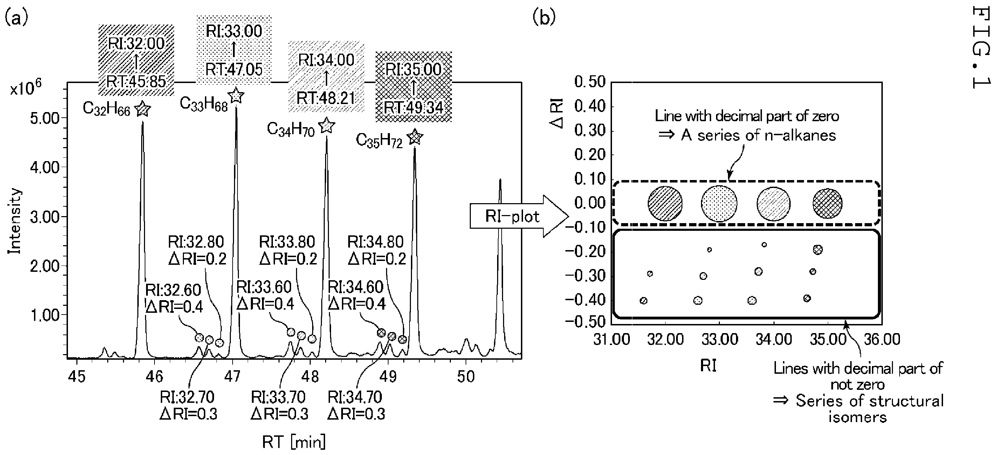

FIGs. 1(a) and 1(b) show exemplary diagrams schematically illustrating RI-plot.

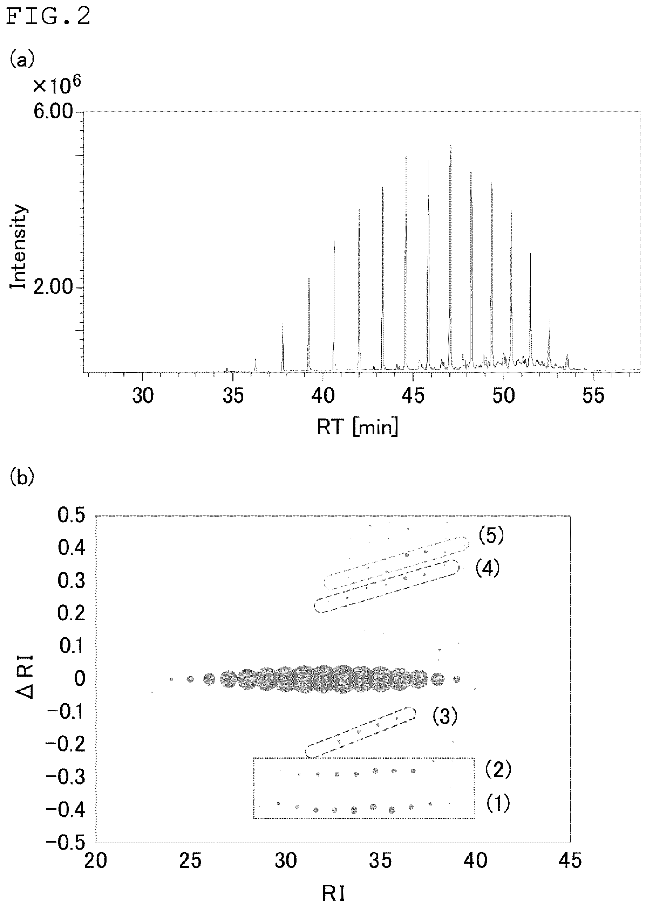

FIGs. 2(a) and 2(b) show an exemplary chromatogram obtained by subjecting a specific wax alone to gas chromatography (GC) and an exemplary diagram obtained by two-dimensional plot with a retention time (RI) in the chromatogram on the x axis and a difference (ΔRI) between an integer part of the RI and the RI on the y axis.

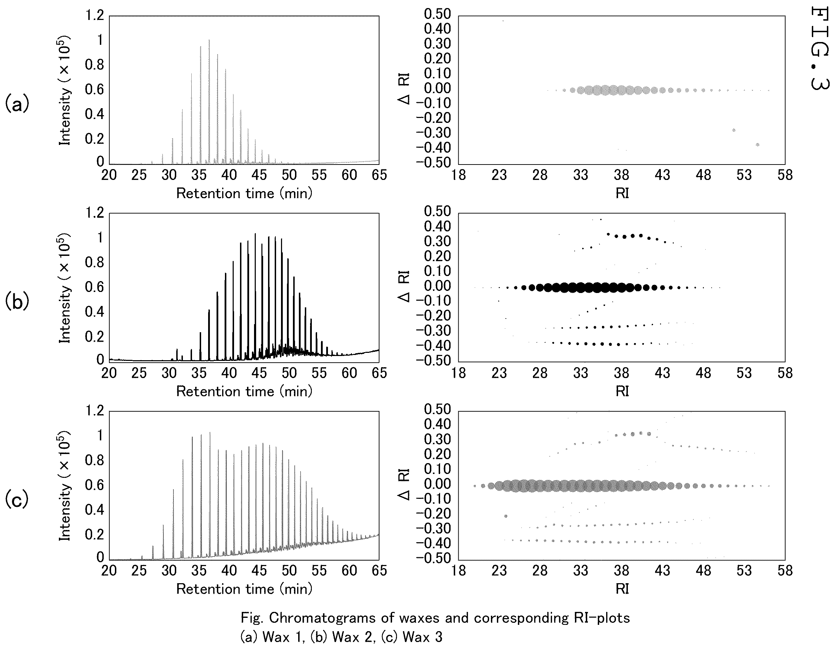

FIGs. 3(a), 3(b), and 3(c) show exemplary chromatograms each obtained by subjecting a wax alone to gas chromatography (GC) and exemplary diagrams each obtained by two-dimensional plot with a retention time (RI) in the corresponding chromatogram on the x axis and a difference (ΔRI) between an integer part of the RI and the RI on the y axis.

### DESCRIPTION OF EMBODIMENTS

### <Method for analyzing wax or rubber composition>

The method for analyzing a wax or the method for analyzing a rubber composition containing a wax involves chromatography, and the chromatography is analyzed using RI-plot.

Analysis by gas chromatography (GC), which is commonly employed in the evaluation of wax properties, relies heavily on manual operation. Efforts to optimize wax by a combination of statistical approaches such as design of experiments and multivariate analysis have been insufficient.

Kendrick mass defect (KMD) analysis is widely used to obtain the structural information of polymer materials. However, KMD analysis is not applicable to components having the same mass, such as structural isomers (for example, normal- and iso-structural isomers of (olefin-based) hydrocarbon materials).

In contrast, the inventors of the above-described analysis method focused on the detection of components regularly appearing in a chromatogram, such as structural isomers with a branched structure and compounds having the same number of carbon atoms, and they considered RI-plot. The use of RI-plot in the analysis of chromatography of a wax alone or a rubber composition containing a wax enables easy visualization of structural isomers of hydrocarbons and compounds having the same number of carbon atoms in the wax.

Since the use of RI-plot in the analysis of chromatography enables easy visualization of structural isomers of hydrocarbons, hydrocarbon components in a wax which contains structural isomers of hydrocarbons can be analyzed and specified.

The method for analyzing a wax or a rubber composition includes chromatography.

Non-limiting examples of the chromatography include gas chromatography (GC), liquid chromatography (LC), supercritical fluid chromatography, and thin-layer chromatography. Non-limiting examples of detectors for the chromatography include hydrogen flame ionization detectors (FID) and mass spectrometers (MS).

In the analysis method, the chromatography is analyzed using RI-plot.

The RI-plot refers to a technique including two-dimensional plot with a retention time (RI: retention index) in a chromatogram on the x axis and a difference (ΔRI) between an integer part of the RI and the RI on the y axis.

FIGs. 1(a) and 1(b) show exemplary diagrams schematically illustrating RI-plot.

FIG. 1(a) shows an exemplary chromatogram obtained by subjecting a wax alone to gas chromatography (GC).

The obtained RTs are converted to RIs as described below.

First, a wax is measured using a standard reagent for the retention index (for example, a standard reagent for GC-MS available from GL Sciences Inc.) to obtain a chromatogram. Retention times (RT) and the carbon numbers (RI) of normal alkanes are obtained from the chromatogram. Subsequently, an RT vs. RI correlation formula is created (achievable by analysis software, for example). Next, the RTs of the measured wax are converted to RIs.

Thereafter, the RIs and calculated ΔRIs are two-dimensionally plotted.

For example, FIG. 1(a) indicates detection of a large peak (RI: 33.00, integer part) attributed to a C₃₃H₆₈ normal alkane with a straight chain structure as well as two peaks, (RI: 32.80, ΔRI: 0.20) and (RI: 32.70, ΔRI: 0.30), attributed to C₃₃H₆₈ isoalkanes with a branched structure which are structural isomers of the normal alkane and one peak (RI: 32.60, ΔRI: 0.40) attributed to a C₃₃H₆₆ alkane with a cyclic structure.

As shown in FIG. 1(a), the analysis method that includes RI-plot can detect normal alkanes with a straight chain structure as well as isoalkanes with a branched structure which are structural isomers of each normal alkane with a straight chain structure and alkanes with a cyclic structure which are compounds having the same number of carbon atoms as each normal alkane with a straight chain structure.

FIG. 1(b) indicates that analyzing the chromatogram in FIG. 1(a) obtained by subjecting a wax alone to gas chromatography (GC) using RI-plot that includes two-dimensional plot with a retention time (RI) in the chromatogram on the x axis and a difference (ΔRI) between an integer part of the RI and the RI on the y axis enables creation of a scatter diagram schematically plotting normal alkanes with a straight chain structure, isoalkanes with a branched structure which are structural isomers of each normal alkane with a straight chain structure, and compounds having the same number of carbon atoms as each normal alkane with a straight chain structure, and the amounts of these components in the wax.

As shown in FIG. 1(b), the RI-plot can easily visualize normal alkanes with a straight chain structure (n-alkanes), isoalkanes with a branched structure which are structural isomers of each normal alkane, and alkanes with a cyclic structure, and the amounts of these components in the wax.

Specifically, as shown in FIG. 1(b), application of RI-plot to the obtained chromatogram of the wax can easily visualize the components of the molecular formulas C₃₂H₆₆ and C₃₂H₆₄, C₃₃H₆₈ and C₃₃H₆₆, C₃₄H₇₀ and C₃₄H₆₈^{,} and C₃₅H₇₂ and C₃₅H₇₀ in the wax, specifically, normal alkanes with a straight chain structure of the molecular formulas C₃₂H₆₆, C₃₃H₆₈, C₃₄H₇₀, and C₃₅H₇₂ (on a line with a decimal part of ΔRI is zero: a series of n-alkanes); and isoalkanes with a branched structure of the molecular formulas C₃₂H₆₆, C₃₃H₆₈, C₃₄H₇₀, and C₃₅H₇₂ and alkanes with a cyclic structure of the molecular formulas C₃₂H₆₄, C₃₃H₆₆, C₃₄H₆₈, and C₃₅H₇₀ (on lines with a decimal part of ΔRI is not zero: a series of isoalkanes with a branched structure which are structural isomers of each normal alkane and a series of alkanes with a cyclic structure having the same number of carbon atoms as each normal alkane) as well as the amounts of those components in the wax.

Specifically, as shown in FIG. 1(b), application of RI-plot to the obtained chromatogram of the wax can easily visualize the each component of the molecular formulas and the amounts thereof in the wax regarding C32H66 and C32H64, C33H68 and C33H66, C34H70 and C34H68, and C35H72 and C35H70 described below.
The each component of the above molecular formulas are indicated as a normal alkanes with a straight chain structure of the molecular formulas C32H66, C33H68, C34H70, and C35H72 (on a line with a decimal part of ΔRI is zero : a series of n-alkanes), and isoalkanes with a branched structure of the molecular formulas C32H66, C33H68, C34H70, and C35H72 and alkanes with a cyclic structure of the molecular formulas C32H64, C33H66, C34H68, and C35H70 (on lines with a decimal part of ΔRI is not zero: a series of isoalkanes with a branched structure which are structural isomers of each normal alkane and a series of alkanes with a cyclic structure having the same number of carbon atoms as each normal alkane).

In the scatter diagram in FIG. 1(b), the sizes of plots (points) schematically indicate the amounts of the hydrocarbons. For example, with regard to the components of the molecular formulas C₃₃H₆₈ and C₃₃H₆₆, the scatter diagram indicates that the percentage of the normal alkane with a straight chain structure of the molecular formula C₃₃H₆₈, which is illustrated with a large plot, in the wax is very high, while the percentages of the isoalkanes with a branched structure of the molecular formula C₃₃H₆₈ which are structural isomers of the normal alkane with a straight chain structure, which are illustrated with small plots, and the percentage of the alkane with a cyclic structure of the molecular formula C₃₃H₆₆ having the same number of carbon atoms as the normal alkane, which is illustrated with a small plot, are low.

FIGs. 1(a) and 1(b) show an example of analysis of a chromatogram of a wax alone using RI-plot. A rubber composition containing a wax can similarly be analyzed using RI-plot. In the case of a wax alone, for example, a sample prepared by dissolving the wax alone in an organic solvent and heating the solution to the melting point is subjected to chromatography, whereby a chromatogram like the one in FIG. 1(a) can be obtained. Then, RI-plot of the chromatogram is performed, whereby a scatter diagram like the one in FIG. 1(b) can be obtained. In the case of a rubber composition containing a wax, for example, a sample prepared by extracting the wax in the rubber composition with an organic solvent or a sample prepared by scraping the surface of the rubber composition is subjected to chromatography and RI-plot in the same manner as described in the case of a wax alone, whereby a chromatogram and a scatter diagram like those in FIGs. 1(a) and 1(b) can be obtained.

FIGs. 2(a) and 2(b) show an exemplary chromatogram obtained by subjecting a specific wax alone to gas chromatography (GC) and an exemplary diagram obtained by two-dimensional plot with a retention time (RI) in the chromatogram on the x axis and a difference (ΔRI) between an integer part of the RI and the RI on the y axis. FIG. 2(b) indicates that the wax has five signals in ΔRI regions of (1) components having a ΔRI value of -0.45 or more and less than -0.35, (2) components having a ΔRI value of -0.35 or more and less than -0.20, (3) components having a ΔRI value of -0.20 or more and -0.10 or less, (4) components having a ΔRI value of +0.20 or more and less than +0.30, and (5) components having a ΔRI value of +0.30 or more and +0.40 or less.

FIGs. 3(a), 3(b), and 3(c) show exemplary chromatograms each obtained by subjecting a wax alone to gas chromatography (GC) and exemplary diagrams each obtained by two-dimensional plot with a retention time (RI) in the chromatogram on the x axis and a difference (ΔRI) between an integer part of the RI and the RI on the y axis.

The organic solvent may be any organic solvent that can extract waxes. Examples thereof include cyclohexane, tetrahydrofuran (THF), chloroform, and toluene.

As described above, the analysis of chromatography uses RI-plot in the analysis method. For example, the analysis method can detect and isolate a normal alkane with a straight chain structure, an isoalkane with a branched structure which is a structural isomer of the normal alkane with a straight chain structure, and an alkane with a cyclic structure which is a compound having the same number of carbon atoms as the normal alkane with a straight chain structure. Further, the analysis method can easily visualize the structures and amounts of these components.

### <Rubber composition>

The rubber composition (hereinafter, also referred to as "first rubber composition") contains a rubber component and a wax, the wax having a signal in a specific ΔRI region as analyzed by chromatography using RI plot that includes two-dimensional plot with a retention time (RI) in a chromatogram on the x axis and a difference (ΔRI) between an integer part of the RI and the RI on the y axis.

Moreover, the rubber composition (hereinafter, also referred to as "second rubber composition") contains a rubber component and a wax, the wax containing a normal alkane with a straight chain structure and at least one of an isoalkane with a branched structure or an alkane with a cyclic structure, the isoalkane with a branched structure being a structural isomer of the normal alkane with a straight chain structure, the alkane with a cyclic structure being a compound having the same number of carbon atoms as the normal alkane with a straight chain structure, the percentage of the normal alkane with a straight chain structure contained in 100% by mass of the wax being less than 95% by mass.

Furthermore, the rubber composition (hereinafter, also referred to as "third rubber composition") contains a rubber component and a wax, the wax containing at least one of an isoalkane with a branched structure or an alkane with a cyclic structure and having five signals in ΔRI regions of components (1) to (5) described below as analyzed by chromatography using RI plot that includes two-dimensional plot with a retention time (RI) in a chromatogram on the x axis and a difference (ΔRI) between an integer part of the RI and the RI on the y axis,
(1) components having a ΔRI value of -0.45 or more and less than -0.35;
(2) components having a ΔRI value of -0.35 or more and less than -0.20;
(3) components having a ΔRI value of -0.20 or more and -0.10 or less;
(4) components having a ΔRI value of +0.20 or more and less than +0.30; and
(5) components having a ΔRI value of +0.30 or more and +0.40 or less,
the at least one of an isoalkane with a branched structure or an alkane with a cyclic structure having a certain range of carbon number distribution.

As described above, the use of RI-plot in the analysis of chromatography enables easy visualization of the normal alkane with a straight chain structure, the isoalkane with a branched structure, and the alkane with a cyclic structure in the wax. Thus, the structures and amounts of the hydrocarbons in the wax can be analyzed and specified. Therefore, for example, investigation of the relationship between the hydrocarbon component contents of a wax in the rubber composition and the ozone resistance of the rubber composition can specify the hydrocarbon components that highly contribute to improving the ozone resistance in the wax. Further, the use of such components enables production of rubber compositions with excellent ozone resistance.

The materials contained in the first rubber composition, the second rubber composition, and the third rubber composition are described below.

The first rubber composition, the second rubber composition, and the third rubber composition each contain a rubber component.

Herein, the rubber component is a component that contributes to cross-linking and generally corresponds to a polymer component which has a weight average molecular weight (Mw) of 10000 or more and which is not extractable with acetone. The component is solid at 25°C.

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component usable in the first rubber composition, the second rubber composition, or the third rubber composition may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of rubber components usable in the first rubber composition, the second rubber composition, and the third rubber composition include diene-based rubbers. Examples of diene-based rubbers include an isoprene-based rubber, polybutadiene rubber (BR), styrene-butadiene rubber (SBR), styrene-isoprene-butadiene rubber (SIBR), ethylenepropylene-diene rubber (EPDM), chloroprene rubber (CR), and acrylonitrile-butadiene rubber (NBR). Examples of such rubber components also include butyl-based rubbers and fluororubbers. Each of these may be used alone, or two or more of these may be used in combination. Modified or hydrogenated products of these rubber components are also usable. Extended rubbers extended with oils, resins, liquid rubber components, or the like are usable as well.

The materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and /or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the materials (monomers) of synthetic rubbers such as IR, SBR, and BR may be derived from biomass. Herein, the term "biomass" refers to substances derived from natural resources such as plants. Non-limiting examples of biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the ¹⁴C content of a sample to the ¹⁴C content of a modern carbon standard (modern standard reference). This value is used as an index indicative of the biomass ratio of a compound. The following will describe what this value means.

One mole of carbon atoms (6.02 × 10²³ carbon atoms) includes about 6.02 × 10^{11 14}C atoms (about one trillionth of the number of normal carbon atoms). ¹⁴C is called a radioactive isotope and its half-life period is 5730 years and the number thereof regularly decreases. Decay of all the ¹⁴C atoms requires 226000 years. This means that in the fossil fuels, such as coal, petroleum, and natural gas, which are considered to be left for at least 226000 years after carbon dioxide and the like in the air were taken into and fixed in plants, or the like, all the ¹⁴C atoms which had been contained in the plants or the like at the beginning of the fixation were decayed. Therefore, in the current 21st century, the fossil fuels, such as coal, petroleum, and natural gas, contain no ¹⁴C atoms. Thus, chemical materials prepared from such fossil fuel raw materials contain no ¹⁴C atoms either.

Meanwhile, ¹⁴C is unceasingly generated by nuclear reaction of cosmic rays in the air, and this generation balances with the ¹⁴C reduction due to radioactive decay. Thus, in the global atmosphere, the amount of ¹⁴C is constant. Then, the ¹⁴C content of materials derived from biomass resources which are circulating in the current environment is about 1 × 10⁻¹² mol% of the total of C atoms as described above. Therefore, a difference in the values can be used to calculate the biomass ratio of a compound.

The amount of ¹⁴C is generally determined as follows. ¹³C content (¹³C/¹²C) and ¹⁴C content (¹⁴C/¹²C) are determined by tandem accelerator-based mass spectrometry. In the determination, the ¹⁴C content of the natural carbon cycle at 1950 is used as a modern standard reference, that is, a standard ¹⁴C content. The particular standard substance used is an oxalic acid standard offered by the National Institute of Standards and Technology (NIST), United States. The specific radioactivity of carbon (intensity of radioactivity of ¹⁴C per gram of carbon) in the oxalic acid is corrected for carbon isotopic fractionation to a certain value for ¹³C, and is then corrected for decay between 1950 AD and the measurement date. This corrected value is taken as the standard ¹⁴C content (100%). The ratio between this value and the actual measurement value of a sample is defined as pMC.

Thus, a rubber 100% produced from materials derived from biomass is expected to have roughly about 110 pMC because, although there are some differences such as regional differences, currently such a material often fails to exhibit a value of 100 in usual conditions. On the other hand, the measured ¹⁴C content of chemical substances derived from fossil fuels, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

In particular, the first rubber composition, the second rubber composition, and the third rubber composition each preferably contain at least one selected from the group consisting of an isoprene-based rubber, BR, and SBR.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

Any BR may be used, and examples include high-cis BR having high cis content, BR containing syndiotactic polybutadiene crystals, and BR synthesized using rare earth catalysts (rare earth-catalyzed BR). Each of these may be used alone, or two or more of these may be used in combination. In particular, the BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the formula: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40) / (20 + 10)).

The BR may be either unmodified BR or modified BR. Examples of the modified BR include those into which the functional groups listed for the modified rubbers have been introduced. The BR may also be hydrogenated polybutadiene polymers (hydrogenated BR).

Any SBR may be used. Examples include emulsion-polymerized styrene-butadiene rubbers (E-SBR) and solution-polymerized styrene-butadiene rubbers (S-SBR). Each of these may be used alone or two or more of these may be used in combination.

The styrene content of the SBR is preferably 5% by mass or higher, more preferably 20% by mass or higher, still more preferably 23.5% by mass or higher. The styrene content is preferably 60% by mass or lower, more preferably 40% by mass or lower, still more preferably 35% by mass or lower. When the styrene content is within the range indicated above, the advantageous effect tends to be better achieved.

Herein, the styrene content can be measured by ¹H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl bond content of the SBR is preferably 30% by mass or higher, more preferably 40% by mass or higher, still more preferably 50% by mass or higher. The vinyl bond content is preferably 70% by mass or lower, more preferably 65% by mass or lower, still more preferably 60% by mass or lower. When the vinyl bond content is within the range indicated above, the advantageous effect tends to be better achieved.

Herein, the vinyl bond content (1,2-butadiene unit content) can be measured by infrared absorption spectrometry.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the equation: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either unmodified SBR or modified SBR. Examples of the modified SBR include those into which the functional groups listed for the modified rubbers have been introduced. The SBR may also be hydrogenated styrene-butadiene copolymers (hydrogenated SBR).

In the first rubber composition, the second rubber composition, and the third rubber composition which contain an isoprene-based rubber, the amount of the isoprene-based rubber based on 100% by mass of the rubber component is preferably 5% by mass or more, more preferably 30% by mass or more, still more preferably 50% by mass or more, while it is preferably 90% by mass or less, more preferably 80% by mass or less, still more preferably 70% by mass or less. When the amount is within the range indicated above, the advantageous effect tends to be better achieved.

In the first rubber composition, the second rubber composition, and the third rubber composition which contain BR, the amount of the BR based on 100% by mass of the rubber component is preferably 5% by mass or more, more preferably 30% by mass or more, still more preferably 50% by mass or more, while it is preferably 90% by mass or less, more preferably 80% by mass or less, still more preferably 70% by mass or less. When the amount is within the range indicated above, the advantageous effect tends to be better achieved.

In the first rubber composition, the second rubber composition, and the third rubber composition which contain SBR, the amount of the SBR based on 100% by mass of the rubber component is preferably 5% by mass or more, more preferably 30% by mass or more, still more preferably 50% by mass or more, while it is preferably 90% by mass or less, more preferably 80% by mass or less, still more preferably 70% by mass or less. When the amount is within the range indicated above, the advantageous effect tends to be better achieved.

The first rubber composition, the second rubber composition, and the third rubber composition each contain a wax.

Here, the wax in the first rubber composition has a signal in a specific ΔRI region as analyzed by chromatography using RI plot that includes two-dimensional plot with a retention time (RI) in a chromatogram on the x axis and a difference (ΔRI) between an integer part of the RI and the RI on the y axis.

The wax in the second rubber composition contains a normal alkane with a straight chain structure and at least one of an isoalkane with a branched structure or an alkane with a cyclic structure. The isoalkane with a branched structure is a structural isomer of the normal alkane with a straight chain structure. The alkane with a cyclic structure is a compound having the same number of carbon atoms as the normal alkane with a straight chain structure. The percentage of the normal alkane with a straight chain structure contained in 100% by mass of the wax is less than 95% by mass.

The wax in the third rubber composition contains at least one of an isoalkane with a branched structure or an alkane with a cyclic structure and has five signals in ΔRI regions of components (1) to (5) described below as analyzed by chromatography using RI plot that includes two-dimensional plot with a retention time (RI) in a chromatogram on the x axis and a difference (ΔRI) between an integer part of the RI and the RI on the y axis,
(1) components having a ΔRI value of -0.45 or more and less than -0.35;
(2) components having a ΔRI value of -0.35 or more and less than -0.20;
(3) components having a ΔRI value of -0.20 or more and -0.10 or less;
(4) components having a ΔRI value of +0.20 or more and less than +0.30; and
(5) components having a ΔRI value of +0.30 or more and +0.40 or less. The at least one of an isoalkane with a branched structure or an alkane with a cyclic structure has a certain range of carbon number distribution.

Desirably, any of the wax in the first rubber composition, the wax in the second rubber composition, and the wax in the third rubber composition has the properties, percentages, and other features described below.

Examples of the wax in the first rubber composition and the wax in the second rubber composition include waxes having signals in the ΔRI regions shown in FIG. 1(a), i.e., waxes having peaks detected in the ΔRI regions, such as waxes having a large peak (RI: 33.00, integer part) attributed to a C₃₃H₆₈ normal alkane with a straight chain structure, two peaks, (RI: 32.80, ΔRI: -0.20) and (RI: 32.70, ΔRI: -0.30), attributed to C₃₃H₆₈ isoalkanes with a branched structure which are structural isomers of the normal alkane, and one peak (RI: 32.60, ΔRI: -0.40) attributed to a C₃₃H₆₆ alkane with a cyclic structure.

Examples of the wax in the third rubber composition include waxes having five signals in the ΔRI regions shown in FIGs. 2(a) and 2(b), such as waxes having peaks detected in the regions of (1) components having a ΔRI value of - 0.45 or more and less than -0.35; (2) components having a ΔRI value of -0.35 or more and less than -0.20; (3) components having a ΔRI value of -0.20 or more and -0.10 or less; (4) components having a ΔRI value of +0.20 or more and less than +0.30; and (5) components having a ΔRI value of +0.30 or more and +0.40 or less.

From the perspective of ozone resistance, the wax having a signal (detected peak) in a specific ΔRI region is desirably a wax having a signal in a ΔRI region within a range of -0.80 or more and -0.06 or less or a range of +0.06 or more and +0.80 or less. The range is preferably a range of -0.70 or more and -0.07 or less or a range of +0.07 or more and +0.70 or less, more preferably a range of -0.60 or more and -0.08 or less or a range of +0.08 or more and +0.60 or less, still more preferably a range of -0.50 or more and -0.09 or less or a range of +0.09 or more and +0.50 or less.

Here, the signal in a ΔRI region within a range of - 0.05 or more and +0.05 or less is attributed to a normal alkane with a straight chain structure.

From the perspective of ozone resistance, desirably, the wax in the first rubber composition, the wax in the second rubber composition, and the wax in the third rubber composition each contain a normal alkane with a straight chain structure and at least one of an isoalkane with a branched structure or an alkane with a cyclic structure. For example, the waxes are each desirably a wax from which a normal alkane with a straight chain structure and at least one of an isoalkane with a branched structure which is a structural isomer of the normal alkane with a straight chain structure or an alkane with a cyclic structure which is a compound having the same number of carbon atoms as the normal alkane with a straight chain structure are detected by RI-plot.

From the perspective of ozone resistance, in the wax in the first rubber composition, the wax in the second rubber composition, and the wax in the third rubber composition, the percentage of normal alkanes with a straight chain structure contained in 100% by mass of the wax is desirably less than 95% by mass. The percentage of normal alkanes with a straight chain structure is preferably 94.2% by mass or less, more preferably 93.0% by mass or less, still more preferably 92.6% by mass or less. The lower limit is not limited, and it is preferably 80% by mass or more, more preferably 85% by mass or more, still more preferably 88% by mass or more.

In particular, from the perspective of ozone resistance, in the wax in the first rubber composition, the wax in the second rubber composition, and the wax in the third rubber composition, the percentage of normal alkanes with a straight chain structure having a carbon number of 11 or more and 57 or less (C₁₁H₂₄ to C₅₇H₁₁₆) contained in 100% by mass of the wax is desirably less than 95.0% by mass. The percentage of normal alkanes with a straight chain structure having a carbon number of 11 or more and 57 or less is preferably 94.2% by mass or less, more preferably 93.0% by mass or less, still more preferably 92.6% by mass or less. The lower limit is not limited, and it is preferably 80% by mass or more, more preferably 85% by mass or more, still more preferably 88% by mass or more.

From the perspective of ozone resistance, the wax in the first rubber composition, the wax in the second rubber composition, and the wax in the third rubber composition each desirably contain a normal alkane with a straight chain structure and at least one of an isoalkane with a branched structure which is a structural isomer of the normal alkane with a straight chain structure or an alkane with a cyclic structure which is a compound having the same number of carbon atoms as the normal alkane with a straight chain structure. In each wax, the total percentage of the isoalkane with a branched structure which is a structural isomer of the normal alkane with a straight chain structure and the alkane with a cyclic structure which is a compound having the same number of carbon atoms as the normal alkane with a straight chain structure contained in 100% by mass of the wax is desirably more than 6.0% by mass. The total percentage is preferably 6.2% by mass or more, more preferably 6.4% by mass or more, still more preferably 6.5% by mass or more. The upper limit is not limited, and it is preferably 20.0% by mass or less, more preferably 10.0% by mass or less, still more preferably 9.0% by mass or less.

In particular, from the perspective of ozone resistance, the wax in the first rubber composition, the wax in the second rubber composition, and the wax in the third rubber composition each desirably contain a normal alkane with a straight chain structure and at least one of an isoalkane with a branched structure which is a structural isomer of the normal alkane with a straight chain structure or an alkane with a cyclic structure which is a compound having the same number of carbon atoms as the normal alkane with a straight chain structure. In each wax, the total percentage of isoalkanes with a branched structure having a carbon number of 13 or more and 50 or less (C₁₃H₂₈ to C₅₀H₁₀₂) which are structural isomers of the normal alkane with a straight chain structure and alkanes with a cyclic structure having a carbon number of 14 or more and 35 or less (C₁₄H₂₈ to C₃₅H₇₀) which are compounds having the same number of carbon atoms as the normal alkane with a straight chain structure contained in 100% by mass of the wax is desirably more than 6.0% by mass. The total percentage is preferably 6.2% by mass or more, more preferably 6.4% by mass or more, still more preferably 6.5% by mass or more. The upper limit is not limited, and it is preferably 20.0% by mass or less, more preferably 10.0% by mass or less, still more preferably 9.0% by mass or less.

Herein, the percentage of the normal alkane with a straight chain structure, the percentage of the isoalkane with a branched structure, and the percentage of the alkane with a cyclic structure contained in the wax may be determined by the RI-plot or may be calculated from one or more waxes with known compositions including normal alkanes with a straight chain structure, isoalkanes with a branched structure, and alkanes with a cyclic structure.

In the case where the wax in the first rubber composition, the wax in the second rubber composition, or the wax in the third rubber composition contains the normal alkane with a straight chain structure, the carbon number distribution of the normal alkane with a straight chain structure (the average carbon number of normal alkanes in the rubber composition) is preferably 29 or more, more preferably 33 or more, still more preferably 36 or more, while it is preferably 45 or less, more preferably 42 or less, still more preferably 40 or less.

In the case where the wax in the first rubber composition, the wax in the second rubber composition, or the wax in the third rubber composition contains an isoalkane with a branched structure which is a structural isomer of the normal alkane with a straight chain structure, the carbon number distribution of the isoalkane with a branched structure (the average carbon number of isoalkanes in the rubber composition) is preferably 25 or more, more preferably 30 or more, still more preferably 33 or more, while it is preferably 45 or less, more preferably 42 or less, still more preferably 40 or less.

In the case where the wax in the first rubber composition, the second rubber composition, or the third rubber composition contains an alkane with a cyclic structure which is a compound having the same number of carbon atoms as the normal alkane with a straight chain structure, the carbon number distribution of the alkane with a cyclic structure (the average carbon number of isoalkanes in the rubber composition) is preferably 20 or more, more preferably 24 or more, still more preferably 27 or more, while it is preferably 40 or less, more preferably 35 or less, still more preferably 32 or less.

From the perspective of ozone resistance, desirably, the wax in the first rubber composition, the wax in the second rubber composition, or the wax in the third rubber composition contains at least one of an isoalkane with a branched structure or an alkane with a cyclic structure and has five signals in ΔRI regions of components (1) to (5) described below as analyzed by chromatography using RI plot that includes two-dimensional plot with a retention time (RI) in a chromatogram on the x axis and a difference (ΔRI) between an integer part of the RI and the RI on the y axis,
(1) components having a ΔRI value of -0.45 or more and less than -0.35;
(2) components having a ΔRI value of -0.35 or more and less than -0.20;
(3) components having a ΔRI value of -0.20 or more and -0.10 or less;
(4) components having a ΔRI value of +0.20 or more and less than +0.30; and
(5) components having a ΔRI value of +0.30 or more and +0.40 or less. The at least one of an isoalkane with a branched structure or an alkane with a cyclic structure has a certain range of carbon number distribution.

From the perspective of ozone resistance, the isoalkane with a branched structure desirably has a carbon number distribution that is within a carbon number range of 10 or more and 75 or less (C₁₀-C₇₅). From the perspective of ozone resistance, the carbon number distribution is preferably 12 or more, more preferably 13 or more, still more preferably 15 or more, while it is preferably 65 or less, more preferably 60 or less, still more preferably 55 or less. The isoalkane with a branched structure may include isoalkanes having a carbon number outside the range of the carbon number distribution or may include isoalkanes having a carbon number partly within the carbon number distribution.

From the perspective of ozone resistance, the alkane with a cyclic structure desirably has a carbon number distribution that is within a carbon number range of 10 or more and 75 or less (C₁₀-C₇₅). From the perspective of ozone resistance, the carbon number distribution is preferably 12 or more, more preferably 13 or more, still more preferably 15 or more, while it is preferably 65 or less, more preferably 60 or less, still more preferably 55 or less. The alkane with a cyclic structure may include cyclic alkanes having a carbon number outside the range of the carbon number distribution or may include cyclic alkanes having a carbon number partly within the carbon number distribution.

The carbon number distribution of the wax can be measured by the following method.

### (Carbon number distribution)

Measurement is performed using a capillary GC measuring apparatus with an aluminum-coated capillary column under conditions including helium carrier gas, a flow rate of 4 ml/min, a column temperature of 180°C to 390°C, and a rate of temperature increase of 15°C/min.

The wax in the first rubber composition, the wax in the second rubber composition, or the wax in the third rubber composition (for example, a wax from which a normal alkane with a straight chain structure and at least one of an isoalkane with a branched structure which is a structural isomer of the normal alkane with a straight chain structure or an alkane with a cyclic structure which is a compound having the same number of carbon atoms as the normal alkane with a straight chain structure are detected by RI-plot) can be prepared using a mixture of two or more known waxes each containing the normal alkane with a straight chain structure and at least one of the isoalkane with a branched structure or the alkane with a cyclic structure.

Such known waxes are not limited. Any wax usually used in the tire industry may be suitably used. Examples include mineral wax and plant-derived wax. The term "mineral wax" refers to wax derived from mineral resources such as petroleum or natural gas. The term "plant-derived wax" refers to wax derived from natural resources such as plants. Mineral wax is preferred among these. Examples of plant-derived wax include rice wax, carnauba wax, and candelilla wax. Examples of mineral wax include paraffin wax and microcrystalline wax as well as selected special wax thereof. Paraffin wax is preferred. According to the present embodiments, wax does not include stearic acid. Usable commercial products of wax are available from Ouchi Shinko Chemical Industrial Co., Ltd., Nippon Seiro Co., Ltd., Paramelt, or other manufacturers. Each of these waxes may be used alone, or two or more of these may be used in combination. As described above, a wax having a target carbon number distribution can be prepared using a combination of two or more waxes.

From the perspective of ozone resistance, the amount of the wax (total amount of waxes) in the first rubber composition, the second rubber composition, or the third rubber composition per 100 parts by mass of the rubber component is preferably 0.5 parts by mass or more, more preferably 0.8 parts by mass or more, still more preferably 1.0 parts by mass or more, particularly preferably 1.5 parts by mass or more. The amount is preferably 5.0 parts by mass or less, more preferably 3.0 parts by mass or less, still more preferably 2.0 parts by mass or less.

The first rubber composition, the second rubber composition, and the third rubber composition each may contain a filler.

In the first rubber composition, the second rubber composition, and the third rubber composition, any filler may be used, including materials known in the rubber field. Examples of the filler include inorganic fillers such as carbon black, silica, calcium carbonate, talc, alumina, clay, aluminum hydroxide, aluminum oxide, and mica; bio char, and hard-to-disperse fillers such as microfibrillated plant fibers, short fibrous celluloses, and gel compounds. In particular, the first rubber composition, the second rubber composition, and the third rubber composition each preferably contain at least one of carbon black or silica. Each of these fillers may be used alone, or two or more of these may be used in combination.

Non-limiting examples of carbon black usable in the first rubber composition, the second rubber composition, and the third rubber composition include N134, N110, N220, N234, N219, N339, N330, N326, N351, N550, and N762. The material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, or other manufacturers. Each of these may be used alone, or two or more of these may be used in combination.

The nitrogen adsorption specific surface area (N₂SA) of the carbon black is preferably 20 m²/g or more, more preferably 30 m²/g or more, still more preferably 40 m²/g or more. The N₂SA is preferably 150 m²/g or less, more preferably 130 m²/g or less, still more preferably 120 m²/g or less. When the N₂SA is within the range indicated above, the advantageous effect tends to be better achieved.

Herein, the nitrogen adsorption specific surface area of the carbon black may be determined in accordance with JIS K 6217-2:2001.

Non-limiting examples of silica usable in the first rubber composition, the second rubber composition, and the third rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these are hydrous silica prepared by a wet process because it has a large number of silanol groups. Each of these silica may be used alone, or two or more of these may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid, which is a component thereof, cannot be utilized. Crystallization of silica in husk ash can be suppressed by controlling the burning temperature and burning time (see JP 2009-2594 A, Akita Prefectural University Web Journal B/2019, vol.6, pp.216-222, for example).

Amorphous silica extracted from husks may be commercially available from Wilmar, or other manufacturers.

The nitrogen adsorption specific surface area (N₂SA) of the silica is preferably 50 m²/g or more, more preferably 100 m²/g or more, still more preferably 150 m²/g or more. The upper limit of the N₂SA of the silica is not limited, and it is preferably 350 m²/g or less, more preferably 300 m²/g or less, still more preferably 250 m²/g or less. When the N₂SA is within the range indicated above, the advantageous effect tends to be better achieved.

Here, the N₂SA of silica is measured by a BET method in accordance with ASTM D3037-93.

In the first rubber composition, the second rubber composition, and the third rubber composition which contain carbon black, the amount of the carbon black per 100 parts by mass of the rubber component is preferably 5 parts by mass or more, more preferably 30 parts by mass or more, still more preferably 40 parts by mass or more, while it is preferably 150 parts by mass or less, more preferably 100 parts by mass or less, still more preferably 80 parts by mass or less. When the amount is within the range indicated above, the advantageous effect tends to be better achieved.

In the first rubber composition, the second rubber composition, and the third rubber composition which contain silica, the amount of the silica per 100 parts by mass of the rubber component is preferably 5 parts by mass or more, more preferably 30 parts by mass or more, still more preferably 40 parts by mass or more, while it is preferably 150 parts by mass or less, more preferably 100 parts by mass or less, still more preferably 80 parts by mass or less. When the amount is within the range indicated above, the advantageous effect tends to be better achieved.

In the first rubber composition, the second rubber composition, or the third rubber composition, the amount of the filler (total amount of fillers such as carbon black and silica) per 100 parts by mass of the rubber component is preferably 5 parts by mass or more, more preferably 30 parts by mass or more, still more preferably 60 parts by mass or more, while it is preferably 150 parts by mass or less, more preferably 120 parts by mass or less, still more preferably 100 parts by mass or less. When the amount is within the range indicated above, the advantageous effect tends to be better achieved.

The first rubber composition, the second rubber composition, and the third rubber composition which contain silica may further contain a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., or other manufacturers. Each of these may be used alone, or two or more of these may be used in combination.

In the first rubber composition, the second rubber composition, or the third rubber composition, the amount of the silane coupling agent per 100 parts by mass of the silica is preferably 0.1 parts by mass or more, more preferably 3 parts by mass or more, still more preferably 5 parts by mass or more. The upper limit of the amount is preferably 50 parts by mass or less, more preferably 20 parts by mass or less, still more preferably 15 parts by mass or less. When the amount is within the range indicated above, the advantageous effect tends to be better achieved.

The first rubber composition, the second rubber composition, and the third rubber composition each may contain a plasticizer (softening agent).

Herein, the term "plasticizer" refers to a material that imparts plasticity to rubber components and conceptually includes both plasticizers that are liquid at room temperature (25°C) and plasticizers that are solid at room temperature (25°C). Examples of the plasticizer include resin components, oils, liquid polymers, and ester plasticizers. These plasticizers may be derived from petroleum, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Herein, the term wax is not included in plasticizers.

Specific examples of the plasticizer include oils, liquid polymers, and resins. Each of these may be used alone, or two or more of these may be used in combination.

Examples of oils include process oils, plant oils, and animal oils. Examples of process oils include paraffinic process oils (mineral oils), naphthenic process oils, and aromatic process oils. Specific examples of process oils include mild extracted solvates (MES), distillate aromatic extracts (DAE), treated distillate aromatic extracts (TDAE), treated residual aromatic extracts (TRAE), and residual aromatic extracts (RAE). For environmental protection, process oils with a low polycyclic aromatic compound (PCA) content may be used. Examples of the process oils with a low PCA content include MES, TDAE, and heavy naphthenic oils. In view of life cycle assessment, oils obtained by purifying waste oils used in rubber mixing machines or engines or waste cooking oils used in cooking establishments may be used.

Herein, examples of plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at room temperature (25°C). Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at room temperature (25°C).

Whether a rubber composition contains the acylglycerol may be examined by any method such as ¹H-NMR analysis. For example, a rubber composition containing triacylglycerol is immersed in deuterium chloroform at room temperature (25°C) for 24 hours. After removing the rubber composition, the ¹H-NMR is measured at room temperature. Signals observed at around 5.26 ppm, around 4.28 ppm, and around 4.15 ppm, each referenced to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of ± 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, or the like to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, or other manufacturers.

Examples of the liquid polymers include liquid diene polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably 1.0 × 10³ to 5.0 × 10⁴, more preferably 3.0 × 10³ to 1.5 × 10⁴ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, or other manufacturers.

The resins may be resins that are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable.

The softening point of the resins that are solid at room temperature (25°C), if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effect tends to be better achieved.

The softening point of the resins that are liquid at room temperature (25°C) is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., or other manufacturers.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

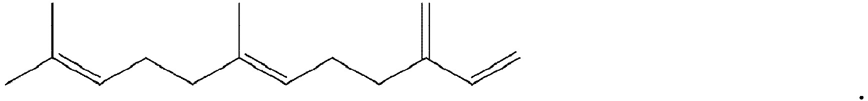

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at room temperature (25°C) may be used. Of these, liquid farnesene polymers that are liquid at room temperature (25°C) are desirable.

In the first rubber composition, the second rubber composition, and the third rubber composition which contain a plasticizer, the amount of the plasticizer (total amount of plasticizers) per 100 parts by mass of the rubber component is preferably 3 parts by mass or more, more preferably 6 parts by mass or more, still more preferably 8 parts by mass or more, while it is preferably 50 parts by mass or less, more preferably 20 parts by mass or less, still more preferably 15 parts by mass or less. When the amount is within the range indicated above, the advantageous effect tends to be better achieved.

Here, the amount of the plasticizer includes the amounts of oils and resins contained in oil-extended rubbers and resin-extended rubbers.

The first rubber composition, the second rubber composition, and the third rubber composition each may further contain vulcanized rubber particles.

The term "vulcanized rubber particles" refers to particles made of vulcanized rubber. Specifically, the rubber powder stipulated in JIS K 6316:2017 may be used. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Examples of usable commercial products of vulcanized rubber particles include those available from Lehigh, Muraoka Rubber Reclaiming Co., Ltd, or other manufacturers.

In the first rubber composition, the second rubber composition, or the third rubber composition, the amount of vulcanized rubber particles per 100 parts by mass of the rubber component is preferably 5 parts by mass or more, more preferably 7 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effect tends to be better achieved.

In view of properties such as crack resistance and ozone resistance, the first rubber composition, the second rubber composition, and the third rubber composition each preferably contain an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, and other manufacturers.

In the first rubber composition, the second rubber composition, or the third rubber composition, the amount of the antioxidant per 100 parts by mass of the rubber component is preferably 0.5 parts by mass or more, more preferably 1.5 parts by mass or more, still more preferably 2.5 parts by mass or more. The amount is preferably 7.0 parts by mass or less, more preferably 5.0 parts by mass or less.

The first rubber composition, the second rubber composition, and the third rubber composition each preferably contain stearic acid.

In the first rubber composition, the second rubber composition, or the third rubber composition, the amount of the stearic acid per 100 parts by mass of the rubber component is preferably 1.0 parts by mass or more, more preferably 2.5 parts by mass or more, while it is preferably 10.0 parts by mass or less, more preferably 5.0 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., or other manufacturers.

The first rubber composition, the second rubber composition, and the third rubber composition each preferably contain zinc oxide.

In the first rubber composition, the second rubber composition, or the third rubber composition, the amount of the zinc oxide per 100 parts by mass of the rubber component is preferably 1.0 parts by mass or more, more preferably 1.5 parts by mass or more, while it is preferably 5.0 parts by mass or less, more preferably 3.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., or other manufacturers.

The first rubber composition, the second rubber composition, and the third rubber composition each preferably contain sulfur.

In the first rubber composition, the second rubber composition, or the third rubber composition, the amount of the sulfur per 100 parts by mass of the rubber component is preferably 0.5 parts by mass or more, more preferably 0.8 parts by mass or more, still more preferably 1.0 parts by mass or more. The amount is preferably 3.5 parts by mass or less, more preferably 3.0 parts by mass or less, still more preferably 2.5 parts by mass or less. When the amount is within the range indicated above, the advantageous effect tends to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., or other manufacturers. Each of these may be used alone, or two or more of these may be used in combination.

The first rubber composition, the second rubber composition, and the third rubber composition each preferably contain a vulcanization accelerator.

The amount of the vulcanization accelerator in the first rubber composition, the second rubber composition, or the third rubber composition is not limited and may be freely determined according to the desired curing rate and cross-link density. Still, the amount per 100 parts by mass of the rubber component is preferably 0.5 parts by mass or more, more preferably 1.0 parts by mass or more. The upper limit is preferably 8.0 parts by mass or less, more preferably 6.0 parts by mass.

Any type of vulcanization accelerator may be used, including those generally used. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the first rubber composition, the second rubber composition, and the third rubber composition each may appropriately contain agents commonly used in the tire industry such as releasing agents or other materials.

Herein, various materials containing carbon atoms (for example, rubbers, oils, resins, vulcanization accelerators, antioxidants, surfactants) may be derived from carbon dioxide in the air. The materials may be obtained from carbon dioxide by directly converting carbon dioxide or by synthesizing methane from carbon dioxide through methanation and then converting the methane.

The first rubber composition, the second rubber composition, and the third rubber composition each can be produced by, for example, kneading the above-described components using a rubber mixing machine such as an open roll mill or a Banbury mixer and then vulcanizing the kneaded mixture.

The kneading conditions are as follows. In a base kneading step of kneading additives other than cross-linking agents (vulcanizing agents) and vulcanization accelerators, the kneading temperature is preferably 100°C or higher, more preferably 120°C or higher, while it is preferably 180°C or lower, more preferably 170°C. In a final kneading step of kneading vulcanizing agents and vulcanization accelerators, the kneading temperature is preferably 80°C or higher, while it is preferably 120°C or lower, more preferably 110°C or lower. The composition obtained after kneading vulcanizing agents and vulcanization accelerators is usually vulcanized by press vulcanization, for example. The vulcanization temperature is preferably 140°C or higher, more preferably 150°C or higher, while it is preferably 190°C or lower, more preferably 185°C or lower.

The rubber compositions (the first rubber composition, the second rubber composition, the third rubber composition) are each usable as a tire component rubber composition.

Examples of the tire component include a tread such as a cap tread or a base tread, a sidewall, a clinch, a bead apex, a breaker cushion rubber, a rubber for carcass cord topping, an insulation, a chafer, an innerliner, and a side reinforcing layer for run-flat tires. Of these, a tread, a sidewall, or the like is preferred.

The tire is produced using any of the rubber compositions (the first rubber composition, the second rubber composition, the third rubber composition) by a usual method. Specifically, the rubber composition containing necessary additives before vulcanization is extruded and processed into the shape of a tire component and subsequently molded on a tire building machine by a usual method. The resulting tire component is assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is suitably used as a passenger car tire, a large passenger car tire, a large SUV tire, a truck or bus tire, a motorcycle tire, a racing tire, a winter tire (studless tire, snow tire, studded tire), an all-season tire, a run-flat tire, an aircraft tire, a mining vehicle tire, or other types of tires.

### EXAMPLES

Examples (working examples) which are considered preferable to implement the present invention are described below although the scope of the disclosure is not limited to the examples.

Chemicals used in production of tires are listed below. If necessary, the chemicals are purified by usual techniques.
NR: TSR20
BR: BR150B (cis content 97% by mass) available from UBE Corporation
Carbon black: DIABLACK N220 (N₂SA: 114 m²/g) available from Mitsubishi Chemical Corporation
Wax 1: wax 1 described below
Wax 2: wax 2 described below
Wax 3: wax 3 described below
Stearic acid: stearic acid "TSUBAKI" available from NOF Corporation
Zinc oxide: zinc oxide #1 available from Mitsui Mining & Smelting Co., Ltd.
Sulfur: HK-200-5 (powdered sulfur) available from Hosoi Chemical Industry Co., Ltd.
Vulcanization accelerator: NOCCELER CZ (N-cyclohexyl-2-benzothiazolylsulfenamide) available from Ouchi Shinko Chemical Industrial Co., Ltd.

### (Wax 1)

A wax containing the following components A to D at a percentage (% by mass) ratio of the components of A/B/C/D = 94/2/3/1.
A: (C₁₁-C₃₅) normal alkane component having a ΔRI value of -0.05 or more and +0.05 or less
B: (C₁₄-C₂₅) saturated alkane component 1 with a branched structure having a ΔRI value of -0.45 or more and less than -0.35
C: (C₁₃-C₂₄) saturated alkane component 2 with a branched structure having a ΔRI value of -0.35 or more and less than -0.20
D: (C₁₄-C₂₁) unsaturated alkane component 1 with a cyclic structure at the end having a ΔRI value of -0.20 or more and -0.10 or less

### (Wax 2)

A wax containing the following components A and C at a percentage (% by mass) ratio of the components of A/C = 95/5.
A: (C₂₀-C₄₇) normal alkane component having a ΔRI value of -0.05 or more and +0.05 or less
C: (C₂₂-C₄₃) saturated alkane component 2 with a branched structure having a ΔRI value of -0.35 or more and less than -0.20

### (Wax 3)

A wax containing the following components A to F at a percentage (% by mass) ratio of the components of A/B/C/D/E/F = 90/3/4/1/1/1.
A: (C₂₀-C₅₇) normal alkane component having a ΔRI value of -0.05 or more and +0.05 or less
B: (C₂₃-C₅₁) saturated alkane component 1 with a branched structure having a ΔRI value of -0.45 or more and less than -0.35
C: (C₂₄-C₅₀) saturated alkane component 2 with a branched structure having a ΔRI value of -0.35 or more and less than -0.20
D: (C₂₈-C₃₅) unsaturated alkane component 1 with a cyclic structure at the end having a ΔRI value of -0.20 or more and -0.10 or less
E: (C₂₅-C₃₅) unsaturated alkane component 2 with a cyclic structure at the end having a ΔRI value of +0.20 or more and less than +0.30
F: (C₂₅-C₃₆) unsaturated alkane component 3 with a cyclic structure at the end having a ΔRI value of +0.30 or more and +0.40 or less

### <Production of vulcanized rubber composition>

According to the formulations in Table 1, the materials other than the sulfur and the vulcanization accelerator are kneaded in a 1.7 L Banbury mixer (Kobe Steel, Ltd.) at 150°C for five minutes to obtain a kneaded mixture.

The sulfur and the vulcanization accelerator are added to the kneaded mixture, and they are kneaded using an open roll mill at 80°C for five minutes to obtain an unvulcanized rubber composition.

The unvulcanized rubber composition is vulcanized at 170°C for 12 minutes, whereby a vulcanized rubber composition is produced.

Vulcanized rubber compositions according to the different formulations 1 to 6 in Table 1 are simulated. Table 1 shows the results calculated as described in the evaluation methods below.

### <Ozone resistance test>

The ozone resistances of the vulcanized rubber compositions (formulations 1 to 6) are evaluated by observing cracks in a measurement in accordance with JIS K 6259 "Rubber, vulcanized or thermoplastic -- Determination of ozone resistance" under the conditions of an ozone concentration of 50 pphm, a temperature of 40°C, and an elongation strain of 20%. The measurement is performed for 24 hours, and crack growth is evaluated every three hours.

The ozone resistance is expressed as an index relative to the initial ozone resistance taken as 100. The index decreases as the degree of degradation increases (standardized based on the number of cracks on the surface). A smaller reduction in the index indicates better ozone resistance.

### <Analysis of wax alone and rubber composition>

### (Wax alone)

The extracts of the waxes 1, 2, and 3 are subjected to gas chromatography (GC) to obtain chromatograms. The chromatograms are analyzed by RI-plot including two-dimensional plot with a retention time (RI) in the chromatograms on the x axis and a difference (ΔRI) between an integer part of the RI and the RI on the y axis, thereby obtaining scatter diagrams.

### (Rubber composition)

The waxes in the vulcanized rubber compositions (formulations 1 to 6) are extracted with an organic solvent (cyclohexane).

The extracted waxes are subjected to gas chromatography (GC) to obtain chromatograms. The chromatograms are analyzed by RI-plot including two-dimensional plot with a retention time (RI) in the chromatograms on the x axis and a difference (ΔRI) between an integer part of the RI and the RI on the y axis, thereby obtaining scatter diagrams.

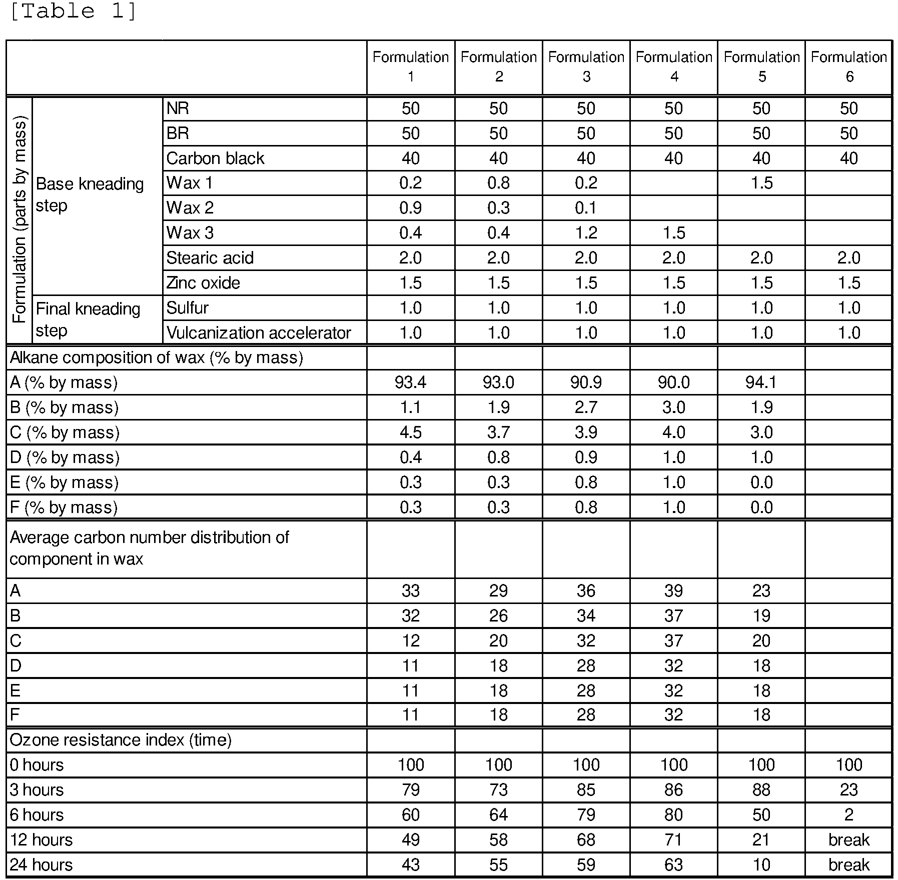

The analysis of each wax alone based on the scatter diagram of the wax alone specifies that the wax 1 alone, the wax 2 alone, and the wax 3 alone each contain the components described above among the components A, B, C, D, E, and F.

The analysis of the rubber compositions of the formulations 1 to 6 based on the scatter diagrams of the waxes extracted from the respective rubber compositions of formulations 1 to 6 specifies that the waxes in the rubber compositions each have the alkane composition including: A (normal alkane), B (saturated alkane 1 with a branched structure), C (saturated alkane 2 with a branched structure), D (unsaturated alkane 1 with a cyclic structure at the end), E (unsaturated alkane 2 with a cyclic structure at the end), and F (unsaturated alkane 3 with a cyclic structure at the end) in 100% by mass of the wax as a whole and the average carbon number distribution shown in Table 1.

As a result of the ozone resistance test, the rubber compositions of the formulations 1 to 4 each containing high percentages of isoalkanes with a branched structure and/or alkanes with a cyclic structure are found to maintain ozone resistance for a long time from the relationship between the ozone resistance indices obtained by the evaluation of the ozone resistances of the formulations 1 to 6 with different degradation times and the scatter diagrams obtained by RI-plot of the formulations 1 to 6.

Exemplary embodiments of the present invention include the following.

Embodiment 1. A method for analyzing a wax or a rubber composition by chromatography,
the chromatography being analyzed using RI-plot.

Embodiment 2. The method for analyzing a wax or a rubber composition according to Embodiment 1,
wherein the RI-plot includes two-dimensional plot with a retention time (RI) in a chromatogram on an x axis and a difference (ΔRI) between an integer part of the RI and the RI on a y axis.

Embodiment 3. The method for analyzing a wax or a rubber composition according to Embodiment 1 or 2,
wherein the RI plot detects a normal alkane with a straight chain structure and at least one of an isoalkane with a branched structure or an alkane with a cyclic structure contained in a wax,
the isoalkane with a branched structure is a structural isomer of the normal alkane with a straight chain structure, and
the alkane with a cyclic structure is a compound having the same number of carbon atoms as the normal alkane with a straight chain structure.

Embodiment 4. A rubber composition containing a rubber component and a wax,
the wax having a signal in a specific ΔRI region as analyzed by chromatography using RI plot that includes two-dimensional plot with a retention time (RI) in a chromatogram on an x axis and a difference (ΔRI) between an integer part of the RI and the RI on a y axis.

Embodiment 5. A rubber composition containing a rubber component and a wax,
the wax containing a normal alkane with a straight chain structure and at least one of an isoalkane with a branched structure or an alkane with a cyclic structure,
the isoalkane with a branched structure being a structural isomer of the normal alkane with a straight chain structure,
the alkane with a cyclic structure being a compound having the same number of carbon atoms as the normal alkane with a straight chain structure,
a percentage of the normal alkane with a straight chain structure contained in 100% by mass of the wax being less than 95% by mass.

Embodiment 6. A rubber composition containing a rubber component and a wax,
the wax containing at least one of an isoalkane with a branched structure or an alkane with a cyclic structure and having five signals in ΔRI regions of components (1) to (5) described below as analyzed by chromatography using RI plot that includes two-dimensional plot with a retention time (RI) in a chromatogram on an x axis and a difference (ΔRI) between an integer part of the RI and the RI on a y axis,
   (1) components having a ΔRI value of -0.45 or more and less than -0.35;
   (2) components having a ΔRI value of -0.35 or more and less than -0.20;
   (3) components having a ΔRI value of -0.20 or more and -0.10 or less;
   (4) components having a ΔRI value of +0.20 or more and less than +0.30; and
   (5) components having a ΔRI value of +0.30 or more and +0.40 or less,
the at least one of an isoalkane with a branched structure or an alkane with a cyclic structure having a certain range of carbon number distribution.

Embodiment 7. The rubber composition according to Embodiment 6,
wherein the at least one of an isoalkane with a branched structure or an alkane with a cyclic structure has a carbon number distribution that is within a carbon number range of 10 or more and 75 or less.

## Claims

1. A method for analyzing a wax or a rubber composition by chromatography,
the chromatography being analyzed using RI-plot.

2. The method for analyzing a wax or a rubber composition according to claim 1,
wherein the RI-plot includes two-dimensional plot with a retention time (RI) in a chromatogram on an x axis and a difference (ΔRI) between an integer part of the RI and the RI on a y axis.

3. The method for analyzing a wax or a rubber composition according to claim 1 or 2,
wherein the RI plot detects a normal alkane with a straight chain structure and at least one of an isoalkane with a branched structure or an alkane with a cyclic structure contained in a wax,
the isoalkane with a branched structure is a structural isomer of the normal alkane with a straight chain structure, and
the alkane with a cyclic structure is a compound having the same number of carbon atoms as the normal alkane with a straight chain structure.

4. A rubber composition comprising a rubber component and a wax,
the wax having a signal in a specific ΔRI region as analyzed by chromatography using RI plot that includes two-dimensional plot with a retention time (RI) in a chromatogram on an x axis and a difference (ΔRI) between an integer part of the RI and the RI on a y axis.

5. A rubber composition comprising a rubber component and a wax,
the wax containing a normal alkane with a straight chain structure and at least one of an isoalkane with a branched structure or an alkane with a cyclic structure,
the isoalkane with a branched structure being a structural isomer of the normal alkane with a straight chain structure,
the alkane with a cyclic structure being a compound having the same number of carbon atoms as the normal alkane with a straight chain structure,
a percentage of the normal alkane with a straight chain structure contained in 100% by mass of the wax being less than 95% by mass.

6. A rubber composition comprising a rubber component and a wax,
the wax containing at least one of an isoalkane with a branched structure or an alkane with a cyclic structure and having five signals in ΔRI regions of components (1) to (5) described below as analyzed by chromatography using RI plot that includes two-dimensional plot with a retention time (RI) in a chromatogram on an x axis and a difference (ΔRI) between an integer part of the RI and the RI on a y axis,
(1) components having a ΔRI value of -0.45 or more and less than -0.35;
(2) components having a ΔRI value of -0.35 or more and less than -0.20;
(3) components having a ΔRI value of -0.20 or more and -0.10 or less;
(4) components having a ΔRI value of +0.20 or more and less than +0.30; and
(5) components having a ΔRI value of +0.30 or more and +0.40 or less,
the at least one of an isoalkane with a branched structure or an alkane with a cyclic structure having a certain range of carbon number distribution.

7. The rubber composition according to claim 6,
wherein the at least one of an isoalkane with a branched structure or an alkane with a cyclic structure has a carbon number distribution that is within a carbon number range of 10 or more and 75 or less.
